# EUROPEAN PATENT APPLICATION

(11) **EP 4 124 778 A1**
(43) Date of publication of application: **01.02.2023**
(21) Application number: 21187760.0
(22) Date of filing: 26.07.2021
(51) Int. Cl.: F16H 39/16, F16H 47/04, F16H 61/42

(54) **HYDRAULIC TRANSMISSION**

(71) Applicant: Danfoss Scotland Ltd, Loanhead, Midlothian EH20 9TB (GB)
(72) Inventor: Stein, Uwe Bernhard Pascal, Loanhead Midlothian, EH20 9TB (GB)
(74) Representative: Keil & Schaafhausen Patentanwälte PartGmbB

(57) **Abstract**

A hydraulic transmission (1) is described comprising a housing (24, 27, 28, 30), an output shaft (17), a first hydraulic machine (6) comprising a main shaft (2) having an input section (3), a second hydraulic machine (18), and a speed/torque summing assembly (11), wherein the first hydraulic machine (6) is torque connected to a first input of the speed/torque summing assembly (11) and the second hydraulic machine is torque connected to a second input of the speed/torque summing assembly (11), and the output shaft (17) is connected to an output (16) of the speed/torque summing assembly (11).

Such a hydraulic transmission should be made compact.

To this end, the first hydraulic machine (6) and the second hydraulic machine (18) are located between the input section (3) and the speed/torque summing assembly (11).

## Description

The present invention relates to a hydraulic transmission comprising a housing, an output shaft, a first hydraulic machine comprising a main shaft having an input section, a second hydraulic machine, and a speed/torque summing assembly, wherein the first hydraulic machine is torque connected to a first input of the speed/torque summing assembly and the second hydraulic machine is torque connected to a second input of the speed/torque summing assembly, and the output shaft is connected to an output of the speed/torque summing assembly.

Such a hydraulic transmission can be used, for example, to drive a vehicle, like a tractor. The input section of the main shaft is connected to a prime mover. When the prime mover is operated, the first hydraulic machine may be operated as a pump or motor. The first hydraulic machine is or can be fluidly connected to the second hydraulic machine, wherein the second hydraulic machine is operated as a pump or motor. The first hydraulic machine is torque connected to a first input of the speed/torque summing assembly and drives a part of the speed/torque summing assembly. The second hydraulic machine is torque connected to a second input of the speed/torque summing assembly and drives another part of the speed/torque summing assembly. The speed/torque summing assembly can then add the rotational speeds of the first hydraulic machine and the second hydraulic machine, or it can sum the torques of the two hydraulic machines. When, for example, the first hydraulic machine and the second hydraulic machine are operated with the corresponding rotational speed, however, in opposite direction, the output speed of the torque/speed summing assembly will be zero. The terms "input" and "output" of the speed/torque summing assembly are used for sake of simplicity. Each input and each output can put into and take torque out of the speed/torque summing assembly.

The number of parts used in such a hydraulic transmission requires a certain space.

The object underlying the invention is to make a hydraulic transmission compact.

This object is solved with a hydraulic transmission as described at the outset in that the first hydraulic machine and the second hydraulic machine are located between the input section and the speed/torque summing assembly.

In this way the radial extension of the hydraulic transmission with respect to the axis of the main shaft can be kept small. The first hydraulic machine, the second hydraulic machine and the speed/torque summing assembly can be arranged one behind the other.

In an embodiment of the invention the first hydraulic machine, the second hydraulic machine and the speed/torque summing assembly have a common axis of rotation. In other words, the rotating elements of the first hydraulic machine, the rotating elements of the second hydraulic machine and the rotating elements of the speed/torque summing assembly use the same axis of rotation.

By arranging the first and second hydraulic machine and the speed/torque summing assembly along the axis of the transmission there is no need for a gear set or chain drive to extract the torque from the central shaft to apply it to an externally mounted hydraulic machine. In this way, the housing does not need to take over a larger torque produced during the operation of the hydraulic transmission so that the dimension of the housing can be kept small.

In an embodiment of the invention the first hydraulic machine is a radial piston machine having a first eccentric which is torque connected to the main shaft. The first eccentric drives the pistons or the pistons drive the first eccentric of the radial piston machine when the first hydraulic machine is operated respectively as a pump or motor. A radial piston machine can be kept short in an axial direction of the hydraulic machine.

In an embodiment of the invention the second hydraulic machine is a radial piston machine comprising a second eccentric, wherein the main shaft extends through the second eccentric. The second hydraulic machine is operated as a pump or motor. The pistons of the second hydraulic machine produce a driving torque on the second eccentric or torque from the second eccentric is applied to drive the pistons. When the second hydraulic machine is operated as a pump the second eccentric is driven along with the main shaft, and drives in turn the pistons of the radial piston machine. The second hydraulic machine can also be kept short in axial direction. Since the main shaft extends through the second eccentric, i.e. extends through the second hydraulic machine, the combination of first hydraulic machine and second hydraulic machine can be made very compact.

In an embodiment of the invention the speed/torque summing assembly is in the form of an epicyclic gear box having three gearing elements, namely a sun gear, planet gears on a planet carrier, and a ring gear. An epicyclic gear box is a rather simple form of a speed/torque summing assembly. It is also possible to arrange two or more epicyclic gear boxes in series, one behind the other.

In an embodiment of the invention the main shaft is torque connected to a first gearing element, the second eccentric is torque connected to a second gearing element, and the output shaft is torque connected to a third gearing element. Thus, the first and the second gearing elements are driven and drive in turn the third gearing element. The same embodiment, as for other embodiments, may experience energy flow in a reverse direction. For example, the output shaft may be torque connected to the wheels of a vehicle, and during a braking operation, the output shaft will provide an input torque to the epicyclic gearbox, thus the third gearing element may drive one or both of the first and second gearing elements. It is therefore understood that the terms 'input' and 'output' are purely for labelling purpose, as their role may switch during operation.

In an embodiment of the invention the main shaft is torque connected to the sun gear, the second eccentric is connected to the planet carrier and the output shaft is connected to the ring gear. Thus, the speeds of the main shaft and the speed of the second eccentric are summed. In this way it is, for example, possible to keep the rotational speed of the main shaft constant, so that the rotational speed of the prime mover can be also kept constant. The rotational speed of the output shaft can be controlled by varying the displacement of the first hydraulic machine and/or of the second hydraulic machine. Thus, the prime mover can be operated in a most economic manner keeping low fuel consumption and exhaust of detrimental gases like CO₂, or in a manner according to some other criteria, such as operating to the optimum operating line of the prime mover.

In an embodiment of the invention the planet carrier is rotatably supported on the main shaft by means of a first support bearing. Thus, the planet carrier is mechanically supported on the main shaft, however, the planet carrier can rotate freely with respect to the main shaft.

In an embodiment of the invention the planet carrier is rotatably supported in the housing by means of a second support bearing. Thus, the planet carrier is supported in the housing in a very stable manner. The main shaft is likewise supported at one end directly in the housing by bearing, and at the other end indirectly in the housing by means of two concentrically arranged bearings, a second support bearing supported by the housing and, a second carrier bearing supported against a bore in the planet carrier with the main shaft held in the central axis. Although the whole construction is rather compact, it provides a high stability.

In an embodiment of the invention the second support bearing and the second carrier bearing are located in the same axial region of the main shaft. This means that the second support bearing and the second carrier bearing overlap each other over a rather large extent, preferably over at least 50 % of their axial length, more preferably over at least 80 % of their axial length and most preferably over 100 % of their axial length. This increases the stability of the support of the planet carrier and of the main shaft.

In an embodiment of the invention the second eccentric is rotatably supported on the main shaft by means of a third bearing. The third bearing is preferably arranged on a side of the second eccentric opposite to the first bearing. Thus, the risk of tilting of the second eccentric with respect to the main shaft is kept small. The second hydraulic machine can be operated with rather high pressures.

In an embodiment of the invention the first hydraulic machine is a digital displacement machine. A digital displacement machine comprises a valve arrangement for each cylinder. The valve arrangement is controlled by means of a controller, so that the amount of hydraulic fluid consumed or delivered in each stroke of the piston can be controlled in a very exact manner. Whether the digital displacement machine is operated as a pump or motor, the controller can adjust, by means of the valve arrangement, the amount of hydraulic fluid which is displaced by each stroke of the piston (high pressure fluid delivered during a pumping stroke, or received during a motoring stroke. When a digital displacement machine is used as one or both of the hydraulic machines, the second hydraulic machine can be operated as a pump or a motor, wherein not only the rotational speed of the motor can be changed, but also the direction of rotation of the machine. Apart from the valve arrangement, no mechanical parts are necessary to adjust the displacement of each cylinder.

In an embodiment of the invention the second hydraulic machine is a digital displacement machine. As described above, a digital displacement machine comprises a valve arrangement for each cylinder which is controlled by the controller.

In an embodiment of the invention the housing is a unitary component, providing a high pressure fluid connection between the first and second hydraulic machines, and a low pressure fluid connection.

In an embodiment of the invention the housing comprises a plurality of housing regions, which together form a unitary housing, which is arranged along the main shaft, wherein the first hydraulic machine is arranged between two housing regions and/or the second hydraulic machine is arranged between two housing regions. Thus, the hydraulic transmission is formed by a single unitary module, which can simply be assembled over and along the main shaft. Production and maintenance of the hydraulic transmission can be realized at low cost.

In an embodiment of the invention each of the hydraulic machines comprises cylinders with each cylinder having a respective high and low pressure valve and a respective high and low pressure port, the transmission comprises hydraulic fluid connections within the housing connecting some or all of the high pressure ports of the first hydraulic machine and the second hydraulic machine.

In an embodiment of the invention each of the hydraulic machines comprises cylinders with each cylinder having a respective high and low pressure valve and a respective high and low pressure port, the transmission comprises hydraulic fluid connections through a crankcase void, the void connecting low pressure ports of some or all of the cylinders of the first hydraulic machine and second hydraulic machine.

In a second aspect the invention relates to a method of operating a hydraulic transmission comprising a housing, an output shaft, a first hydraulic machine comprising a main shaft having an input section, a second hydraulic machine, and a speed/torque summing assembly, wherein the first hydraulic machine is torque connected to a first input of the speed/torque summing assembly and the second hydraulic machine is torque connected to a second input of the speed/torque summing assembly, and the output shaft is connected to an output of the speed/torque summing assembly, wherein the transmission is operated in a first mode, where the first hydraulic machine converts torque from the first input via the main shaft into fluid power, said fluid power is applied to the second hydraulic machine causing rotational movement of the second input of the speed/torque summing assembly, thus causing in an increase of rotational speed of the output shaft.

Alternatively or additionally the invention relates to a method of operating a hydraulic transmission comprising a housing, an output shaft, a first hydraulic machine comprising a main shaft having an input section, a second hydraulic machine, and a speed/torque summing assembly, wherein the first hydraulic machine is torque connected to a first input of the speed/torque summing assembly and the second hydraulic machine is torque connected to a second input of the speed/torque summing assembly, and the output shaft is connected to an output of the speed/torque summing assembly, wherein the transmission is operated in a second mode, where the second hydraulic machine is extracting torque from the second input to the speed/torque summing assembly, converting said torque into fluid power, and converting said fluid power into torque to drive rotation of the main shaft while reducing the rotational speed of the output shaft.

Alternatively or additionally the invention relates to a method of operating a hydraulic transmission comprising a housing, an output shaft, a first hydraulic machine comprising a main shaft having an input section, a second hydraulic machine, and a speed/torque summing assembly, wherein the first hydraulic machine is torque connected to a first input of the speed/torque summing assembly and the second hydraulic machine is torque connected to a second input of the speed/torque summing assembly, and the output shaft is connected to an output of the speed/torque summing assembly, wherein the transmission (1) is operated in a third mode, where the rotation speed of the output shaft is fixed by a hydraulic lock, where in the second hydraulic machine, all cylinders' valves are set to enable a pumping mode in those cylinders, where said pumping will be into a high pressure gallery which is hydraulically closed to form the hydraulic lock, the closed state (aside from any pressure relief valve on the circuit) is determined by the state of the first hydraulic machine in the high pressure gallery, where said first hydraulic machine is set to an idle mode, whereby the low pressure valves of the cylinders are kept open, and thus the high pressure valves are held closed by the pressure difference, thus closing the high pressure gallery.

An embodiment of the invention will now be described in more detail with reference to the drawing, wherein:

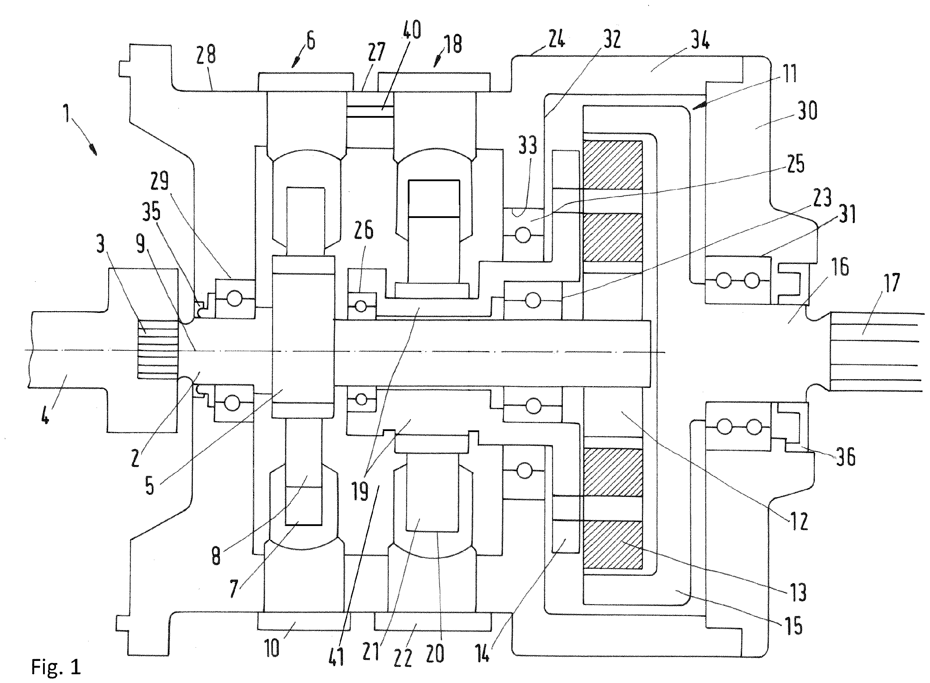

- Fig. 1:: shows a schematic sectional view of a hydraulic transmission and
- Fig. 2:: shows schematically a digital displacement machine.

A hydraulic transmission 1 comprises a main shaft 2 having an input section 3 which is or can be connected to a driving shaft 4 of a prime mover (not shown). The main shaft 2 is connected to an eccentric 5 of a first hydraulic machine 6. The first hydraulic machine 6 is in form of a radial piston machine having a plurality of cylinders 7. A piston 8 is arranged in each cylinder 7. The moving direction of the pistons 8 is perpendicular to an axis of rotation 9 of the main shaft 2. Each cylinder 7 is provided with a valve arrangement 10. The valve arrangement controls a flow into the cylinder 7 and a flow out of the cylinder 7, so that the valve arrangement 10 controls the displacement of each cylinder. The valve arrangement 10 is in turn controlled by a controller (not shown).

Movement of the pistons 8 is caused by the rotation of the eccentric 5. Thus, when the main shaft 2 is driven, the first hydraulic machine 6 is operated as pump.

The main shaft 2 is connected to a speed/torque summing assembly 11. The speed/torque summing assembly 11 is in form of an epicyclic. It comprises a sun gear 12 which is torque connected to the main shaft 2. In other words, the sun gear 12 rotates with the same velocity as the main shaft 2. The speed/torque summing assembly furthermore comprises a number of planet gears 13 meshing with the sun gear 12. The planet gears 13 are supported on a planet carrier 14. Furthermore, the planet gears 13 are in meshing engagement with a ring gear 15. The ring gear 15 forms an output 16 which is connected to an output shaft 17 or is integral with the output shaft 17.

A second hydraulic machine 18 is arranged between the first hydraulic machine 6 and the speed/torque summing assembly 11. The second hydraulic machine 18 comprises a second eccentric 19, second cylinders 20 and second pistons 21. The second hydraulic machine 18 is also in form of a radial piston machine. It comprises also a valve arrangement 22 controlling the displacement of each cylinder 20 of the second hydraulic machine 18.

When the hydraulic transmission 1 is used to drive a vehicle, for example, the second hydraulic machine 18 is operated as motor, wherein the second hydraulic machine 18 receives hydraulic fluid under pressure from the first hydraulic machine 6.

The second eccentric 19 is connected to the planet carrier 14 or is integral with the planet carrier 14.

The planet carrier 14 is rotatably supported on the main shaft 2 by means of a first bearing 23. Furthermore, the planet carrier 14 is rotatably supported in a part 24 of the housing by means of a second bearing 25. The first bearing 23 and the second bearing 25 are arranged in the same axial region of the main shaft 2. This means, that the two bearings 23, 25 are arranged at the same axial position of the main shaft 2 or at least overlap each other in axial direction by at least 50 % of the length of the first bearing 23.

Furthermore, the second eccentric 19 is supported on the main shaft by means of a third bearing 26. The first bearing 23 and the third bearing 26 are located on opposite sides of the second hydraulic machine 18.

The unitary housing comprises a number of housing regions 24, 27, 28. The main shaft 2 is supported in the housing element 28 adjacent to the input section 3 of the main shaft 2 by means of a fourth bearing 29. At the opposite side the housing is closed by a lid 30 connected to housing part 24. The output shaft 17 of the speed/torque summing assembly 11 is supported in the lid 30 by means of a fifth bearing 31.

The housing comprises a high pressure connection 40 between the first hydraulic machine 6 and the second hydraulic machine 18. Furthermore, the housing comprises a void 41 which can be used as a low pressure connection between the first hydraulic machine 6 and the second hydraulic machine 18.

As mentioned above, the two hydraulic machines 6, 18 are digital displacement machines. It should, however, be noted that in an embodiment only one of the hydraulic machines is in form of a digital displacement machine.

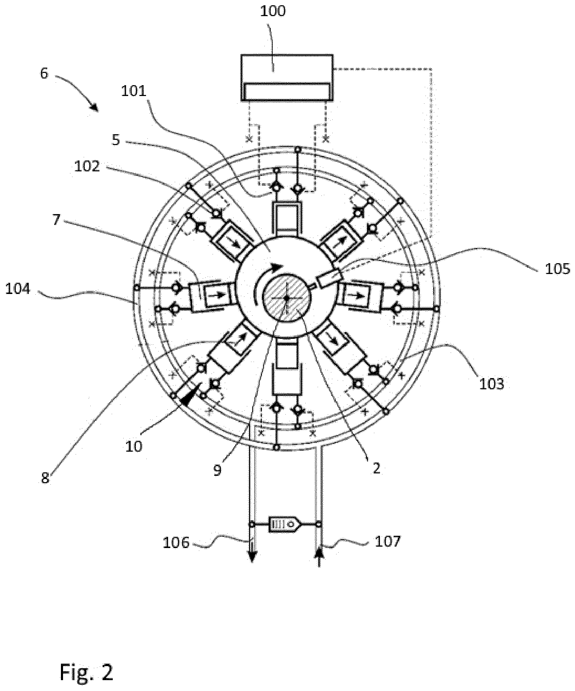

In the first hydraulic machine 6 the first valve arrangement 10 controls by means of a controler 100 the volume of hydraulic fluid which is pumped or delivered by each of the first cylinders 7 during one revolution of the main shaft 2. To this end the first valve arrangement 10 can comprise a plurality of valves 101, 102 (Fig. 2), wherein one valve 101 connects the cylinder 7 with a tank line 103 (or low pressure line or suction line) which is connected to a low pressure port 106 and the other valve 102 connects the cylinder 7 with a pressure line 104 which is connected to a high pressure port 107. A volume of hydraulic fluid corresponding to the maximum stroke of the first piston 8 is pumped or delivered when the valve 101 connecting a first cylinder with the tank line 103 is open during the complete suction stroke and closed during the complete pressure stroke of the first piston 8, wherein the valve 102 connecting the first cylinder 7 to the pressure line 104 is closed during the complete suction stroke and open during the complete pumping stroke.

When only part of the stroke of the first piston 8 should be used to pump hydraulic fluid into the pressure line, the valve 102 connecting the first cylinder 7 with the pressure line 104 is open only during a corresponding part of the stroke of the first piston 8. The valve 101 connecting the first cylinder 7 to the suction or tank line 103 is open when the other valve 102 is closed and closed when the other valve 102 is open.

In this way it is possible to exactly control the amount or volume of hydraulic fluid which is pumped to the second hydraulic machine 18. The more fluid is pumped to the second hydraulic machine 18, the higher the rotational speed of the second hydraulic machine 11 can be.

In the second hydraulic machine 18 the valve arrangement 22 comprises also two valves per cylinder, for example, wherein one valve connects the second cylinder 20 to the pressure line, i.e. to the connection to the first hydraulic machine 6, while the other valve connects the second cylinder 20 to a tank line. Since the second valve arrangement 22 of each second cylinder 20 can be controlled individually, it is possible to control not only the rotational speed of the second hydraulic machine 18, but also the direction of rotation of the second hydraulic machine 18.

The operation of the hydraulic transmission can be described as follows:
When the main shaft 2 is driven the first hydraulic machine 6 is operated as pump. The first hydraulic machine 6 delivers in a controlled manner hydraulic fluid under a controlled pressure to the second hydraulic machine 18. At the same time the main shaft 2 which is connected or integral with the first eccentric 5 of the first hydraulic machine 6 drives the sun gear 12 of the speed/torque summing assembly 11. The sun gear 12 rotates with the same rotational speed as the main shaft 2.

The second hydraulic machine 18 receives hydraulic fluid under pressure and is operated as motor. The second eccentric 19 of the second hydraulic machine 18 is torque connected to the planet carrier 14, so that the planet carrier 14 is rotated. The direction of rotation and the rotational speed of the planet carrier 14 can be controlled by the second valve arrangements 22 of each second cylinder 20.

It is now possible to rotate the main shaft 2 with a constant speed and to vary the rotational speed and the rotational direction of the output shaft 17 by using the second hydraulic machine 18.

When the second hydraulic machine 18 is used to lock the planet carrier 14 in rotational direction, the ring gear 15 is rotated in a direction opposite to the rotational direction of the sun gear 12. Thus, the output shaft 17 rotates in reverse direction compared to the direction of rotation of the main shaft 2.

When the second hydraulic machine 18 is operated to drive the planet carrier 14 which is integral with or connected to the second eccentric 19 in a direction of rotation opposite to that of the sun gear 12 the rotational speed of the ring gear 15 can be reduced and can finally be stopped.

When the second hydraulic machine 18 drives the planet carrier 14 with the same rotational direction as the sun gear 12, the rotational speed of the ring gear 15 can in a first phase of driving be increased up to the rotational speed of the main shaft 2. When the rotational speed of the planet carrier 14 is further increased in a second phase of driving, the rotational speed 5 of the ring gear 15 can further be increased.

The single unitary housing comprises a series of cavities for valves / hydraulic machines. The first hydraulic machine 6 is mounted at the 'input' end of the shaft / area.. Shared common low pressure region, shared high pressure regions negating external plumbing/routing for transfer of high pressure fluid. The housing region 28 can have, for example, a form of a plate having a recess for accommodating the fourth bearing 29. The second hydraulic machine 18 is positioned towards the speed/torque summing assembly end of the shaft between the first hydraulic machine and the speed/torque summing assembly, It comprises a plate 32 having a bore 33 for accommodating the second bearing 25. The plate continues into flanges 34 surrounding the ring gear 15, wherein the flanges 34 form a support for the lid 30.

A sealing 35 is provided between the main shaft 2 and the housing region 28 adjacent to the input section 3 of the main shaft 2. A further sealing 36 is provided at the other end of the hydraulic transmission 1 and seals the lid 30 against the output 16 of the speed/torque summing assembly 11.

Since the functional elements of the first hydraulic machine 6, second hydraulic machine 18 and speed/torque summing assembly 11 are arranged to have a common axis of rotation without having externally mounted elements (e.g. first or second hydraulic machines mounted in a parallel but non-concentric axis with the speed/torque summing assembly), which will require external torque resolution means, the relative torque between the planet(of the speed/torque summing assembly), and the second hydraulic machine, is internally resolved through the, almost tubular, unitary housing

## Claims

1. A hydraulic transmission (1) comprising
a housing (24, 27, 28, 30),
an output shaft (17),
a first hydraulic machine (6) comprising a main shaft (2) having an input section (3),
a second hydraulic machine (18), and
a speed/torque summing assembly (11),
wherein the first hydraulic machine (6) is torque connected to a first input of the speed/torque summing assembly (11) and the second hydraulic machine (18) is torque connected to a second input of the speed/torque summing assembly (11), and the output shaft (17) is connected to an output (16) of the speed/torque summing assembly (11),
**characterized in that** the first hydraulic machine (6) and the second hydraulic machine (18) are located between the input section (3) and the speed/torque summing assembly (11).

2. The hydraulic transmission according to claim 1, **characterized in that** the first hydraulic machine (6), the second hydraulic machine (18) and the speed/torque summing assembly (11) have a common axis of rotation (9).

3. The hydraulic transmission according to claim 1 or 2, **characterized in that** first hydraulic machine (6) is a radial piston machine having a first eccentric (5) which is torque connected to the main shaft (2).

4. The hydraulic transmission according to claim 3, **characterized in that** the second hydraulic machine (18) is a radial piston machine comprising a second eccentric (19), wherein the main shaft (2) extends through the second eccentric (19).

5. The hydraulic transmission according to any of claims 1 to 4, **characterized in that** the speed/torque summing assembly (11) is in form of an epicyclic gear box having three gearing elements, namely a sun gear (12), planet gears(13) on a planet carrier (14), and a ring gear (15).

6. The hydraulic transmission according to claim 5, **characterized in that** the main shaft (2) is torque connected to a first gearing element, in particular to the sun gear (12), the second eccentric (19) is torque connected to a second gearing element, in particular to the planet carrier (14), and the output shaft (17) is torque connected to a third gearing element, in particular to the ring gear (15).

7. The hydraulic transmission according to claim 5 or 6, **characterized in that** the main shaft (2) is rotatably supported on the planet carrier (14) by means of a second carrier bearing (23) and/or the planet carrier (14) is rotatably supported in the housing (24, 27, 28, 30) by means of a second support bearing (25), wherein preferably the second carrier bearing (23) and the second support bearing (25) are located in the same axial region of the main shaft (2).

8. The hydraulic transmission according to any of claims 1 to 7, **characterized in that** the second eccentric (19) is rotatably supported on the main shaft (2) by means of a first support bearing (26).

9. The hydraulic transmission according to any of claims 1 to 8, **characterized in that** the first hydraulic machine (6) is a digital displacement machine.

10. The hydraulic transmission according to any of claims 1 to 9, **characterized in that** the second hydraulic machine (18) is a digital displacement machine.

11. The hydraulic transmission according to any of claims 1 to 10, **characterized in that** the housing (24, 27, 28, 30) is a unitary component, providing a high pressure fluid connection (40), between the first and second hydraulic machines (6, 18), and a low pressure fluid connection.

12. The hydraulic transmission according to any of claims 1 to 11, **characterised in that** each of the hydraulic machines (6, 18) comprises cylinders (7) with each cylinder (7) having a respective high and low pressure valve (101, 102) and a respective high and low pressure port (106, 107), wherein the transmission (1) comprises hydraulic fluid connections (40) within the housing connecting some or all of the high pressure ports (106, 107) of the first hydraulic machine (6) and the second hydraulic machine (18) and/or the transmission (1) comprises hydraulic fluid connections through a crankcase void (41), the void (41) connecting low pressure ports of some or all of the cylinders of the first hydraulic machine (6) and second hydraulic machine (18).

13. A method of operating a hydraulic transmission (1) comprising
a housing (24, 27, 28, 30),
an output shaft (17),
a first hydraulic machine (6) comprising a main shaft (2) having an input section (3),
a second hydraulic machine (18), and
a speed/torque summing assembly (11),
wherein the first hydraulic machine (6) is torque connected to a first input of the speed/torque summing assembly (11) and the second hydraulic machine (18) is torque connected to a second input of the speed/torque summing assembly (11), and the output shaft (17) is connected to an output (16) of the speed/torque summing assembly (11),
**characterised in that** the transmission is operated in a first mode, where the first hydraulic machine (6) converts torque from the first input via the main shaft (2) into fluid power, said fluid power is applied to the second hydraulic machine (18) causing rotational movement of the second input of the speed/torque summing assembly (11), thus causing in an increase of rotational speed of the output shaft (17).

14. A method of operating a hydraulic transmission (1) comprising
a housing (24, 27, 28, 30),
an output shaft (17),
a first hydraulic machine (6) comprising a main shaft (2) having an input section (3),
a second hydraulic machine (18), and
a speed/torque summing assembly (11),
wherein the first hydraulic machine (6) is torque connected to a first input of the speed/torque summing assembly (11) and the second hydraulic machine (18) is torque connected to a second input of the speed/torque summing assembly (11), and the output shaft (17) is connected to an output (16) of the speed/torque summing assembly (11), in particular according to claim 17, **characterised in that** the transmission (1) is operated in a second mode, where the second hydraulic machine (18) is extracting torque from the second input to the speed/torque summing assembly (11), converting said torque into fluid power, and converting said fluid power into torque to drive rotation of the main shaft (2) while reducing the rotational speed of the output shaft (17).

15. A method of operating a hydraulic transmission (1) comprising
a housing (24, 27, 28, 30),
an output shaft (17),
a first hydraulic machine (6) comprising a main shaft (2) having an input section (3),
a second hydraulic machine (18), and
a speed/torque summing assembly (11),
wherein the first hydraulic machine (6) is torque connected to a first input of the speed/torque summing assembly (11) and the second hydraulic machine (18) is torque connected to a second input of the speed/torque summing assembly (11), and the output shaft (17) is connected to an output (16) of the speed/torque summing assembly (11), in particular according to claim 13 or 14, **characterised in that** the transmission (1) is operated in a third mode, where the rotation speed of the output shaft (17) is fixed by a hydraulic lock, where in the second hydraulic machine (18), all cylinders' valves (101, 102) are set to enable a pumping mode in those cylinders, where said pumping will be into a high pressure gallery which is hydraulically closed to form the hydraulic lock, the closed state (aside from any pressure relief valve on the circuit) is determined by the state of the first hydraulic machine (6) in the high pressure gallery, where said first hydraulic machine (6) is set to an idle mode, whereby the low pressure valves (101) of the cylinders (7) are kept open, and thus the high pressure valves (102) are held closed by the pressure difference, thus closing the high pressure gallery.
